(19) Europäisches Patentamt
European Patent Office
Office européen des brevets

(11) **EP 3 320 681 B1**

(12) **EUROPÄISCHE PATENTSCHRIFT**

(45) Veröffentlichungstag und Bekanntmachung des Hinweises auf die Patenterteilung:
**11.10.2023 Patentblatt 2023/41**

(21) Anmeldenummer: **16742195.7**

(22) Anmeldetag: **07.07.2016**

(51) Internationale Patentklassifikation (IPC):
**G06T 7/593** (2017.01)    **H04N 13/106** (2018.01)
**H04N 13/239** (2018.01)    **H04N 13/246** (2018.01)
**G01B 11/30** (2006.01)    **H04N 13/00** (2018.01)

(52) Gemeinsame Patentklassifikation (CPC):
**G01B 11/30; G06T 7/593; H04N 13/106;**
**H04N 13/239; H04N 13/246;** H04N 2013/0081

(86) Internationale Anmeldenummer:
**PCT/EP2016/066177**

(87) Internationale Veröffentlichungsnummer:
**WO 2017/005871 (12.01.2017 Gazette 2017/02)**

(54) **VERFAHREN UND VORRICHTUNG ZUM ABTASTEN VON OBERFLÄCHEN MIT EINER STEREOKAMERA**

METHOD AND DEVICE FOR SCANNING SURFACES USING A STEREO CAMERA

PROCÉDÉ ET DISPOSITIF DE BALAYAGE DE SURFACES AVEC UNE CAMÉRA STÉRÉOSCOPIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.07.2015 DE 102015111120**

(43) Veröffentlichungstag der Anmeldung:
**16.05.2018 Patentblatt 2018/20**

(73) Patentinhaber: **Chromasens GmbH**
**78467 Konstanz (DE)**

(72) Erfinder:
• **ECKHARD, Timo**
**78476Allensbach (DE)**
• **ECKHARD, Jia**
**78476 Allensbach (DE)**

(74) Vertreter: **HGF**
**HGF Europe LLP**
**Neumarkter Straße 18**
**81673 München (DE)**

(56) Entgegenhaltungen:
US-A- 5 179 441      US-A1- 2009 268 010
US-A1- 2014 139 642

• **LILIENBLUM ERIK ET AL: "A Structured Light Approach for 3-D Surface Reconstruction With a Stereo Line-Scan System", IEEE TRANSACTIONS ON INSTRUMENTATION AND MEASUREMENT, IEEE SERVICE CENTER, PISCATAWAY, NJ, US, Bd. 64, Nr. 5, 1. Mai 2015 (2015-05-01), Seiten 1266-1274, XP011577379, ISSN: 0018-9456, DOI: 10.1109/TIM.2014.2364105 [gefunden am 2015-04-03]**
• **ZHANG PENGCHANG ET AL: "A line scan camera based stereo method for high resolution 3D image reconstruction", OPTOMECHATRONIC MICRO/NANO DEVICES AND COMPONENTS III : 8 - 10 OCTOBER 2007, LAUSANNE, SWITZERLAND; [PROCEEDINGS OF SPIE , ISSN 0277-786X], SPIE, BELLINGHAM, WASH, Bd. 9018, 24. Februar 2014 (2014-02-24), Seiten 901807-901807, XP060035668, DOI: 10.1117/12.2038778 ISBN: 978-1-62841-730-2**
• **KIM HANSUNG ET AL: "3D Scene Reconstruction from Multiple Spherical Stereo Pairs", INTERNATIONAL JOURNAL OF COMPUTER VISION, KLUWER ACADEMIC PUBLISHERS, NORWELL, US, Bd. 104, Nr. 1, 3. März 2013 (2013-03-03), Seiten 94-116, XP035362202, ISSN: 0920-5691, DOI: 10.1007/S11263-013-0616-1 [gefunden am 2013-03-03]**

• **JOAO P BARRETO ET AL: "Active Stereo Tracking of $N \le 3$ Targets Using Line Scan Cameras", IEEE TRANSACTIONS ON ROBOTICS, IEEE SERVICE CENTER, PISCATAWAY, NJ, US, Bd. 26, Nr. 3, 1. Juni 2010 (2010-06-01), Seiten 442-457, XP011332981, ISSN: 1552-3098, DOI: 10.1109/TRO.2010.2047300**

## Beschreibung

Die vorliegende Erfindung betrifft ein Verfahren und eine Vorrichtung zum Abtasten von Oberflächen mit einer Stereokamera.

Eine Stereokamera ist eine Kamera mit zwei Kameramodulen, welche jeweils ein Objektiv und einen Bildsensor aufweisen. Stereokameras werden in der Regel zur Aufnahme von stereoskopischen Fotografien verwendet. Mittels Triangulation lassen sich die Höhen der einzelnen Punkte eines abzutastenden Objektes bestimmen.

Will man Farbbilder, die mit zwei Kameramodulen einer Stereokamera aufgenommen worden sind, überlagern, dann ist dies bei räumlichen Objekten problematisch. Durch die Verzerrungen bzw. Verzeichnungen der unterschiedlichen Blickwinkel der Kameramodule ergeben sich Verschiebungen der Farbintensitäten in den einzelnen Bildern, die bei einer Überlagerung aufgrund der relativen Verschiebung zu Fehlfarben führen. Sind die Kameramodule mit unterschiedlichen Farbfiltern ausgestattet, dann kann sich auch hierdurch eine erhebliche Verschiebung in den Farbintensitäten der einzelnen Bilder ergeben.

Aus der US 2004/0032971 A1 geht ein Detektionssystem für Kraftfahrzeuge hervor, welches zwei Infrarotkameras aufweist, mit welchen jeweils ein rechtes Bild und ein linkes Bild erzeugt werden. Der Abstand eines Objekts vor dem Kraftfahrzeug kann anhand des Unterschieds der Position eines Objekts im rechten und linken Bild (Parallaxe) bestimmt werden.

Aus der US 2010/0020178 A1 geht eine Stereokamera hervor, bei welcher die beiden Bilder vor Bestimmung des Orts eines Objekts in den Bildern zueinander ausgerichtet werden. Bei dieser Ausrichtung werden die Bilder so transformiert, dass Epipolarlinien übereinanderliegen. Diese Epipolarlinien sind vorzugsweise horizontal ausgerichtet. In einem iterativen Verfahren werden Disparitäten anhand der ausgerichteten Bilder bestimmt. Die Disparitäten werden verwendet, um das ausgerichtete Bild zu korrigieren, indem die Bildpunkte eines ersten Bildes um die Disparitäten verschoben werden. Dann wird ein Fehler zwischen den beiden Bildern bestimmt. Anhand des ermittelten Fehlers werden Kalibrierparameter ermittelt. Mit diesen Kalibrierparametern wird ein neues Paar von Bildern erfasst und das Verfahren wiederholt.

Aus der US 8,275,195 B2 geht ein Verfahren zum Bestimmen von Disparitäten anhand mehrerer Bilder der gleichen Szene hervor. Bei diesem Verfahren werden zunächst Merkmale der Bilder extrahiert. Diese Merkmale werden in den unterschiedlichen Bildern verfolgt ("Tracking"). Für diese Merkmale werden die Disparitäten bestimmt. Dieses Verfahren bildet vor allem das Verfolgen der einzelnen Merkmale in den Bildern weiter.

In der US 5,432,712 wird ein Verfahren für die Stereobildgebung beschrieben, bei welchem Kantenpunkte ("Edgels") in einem Paar von Bildern ermittelt und einander zugeordnet werden. Hierdurch soll die Zuordnung der Bilder verbessert werden.

In der DE 10 2005 028 490 A1 sind unterschiedliche Kamerasysteme beschrieben, in welchen jeweils eine Farb- oder Infrarotkamera mit einer Tiefen- oder Stereokamera kombiniert wird. In einer Ausführungsform sind eine Monochromkamera sowie eine Farbkamera vorgesehen. Die Farbkamera ist mit einer Transformationseinheit verbunden, mit welcher die gelieferten Farbbilder in Monochrombilder umgesetzt werden können, sodass diese mit den Monochrombildern der Monochromkamera als Stereobilder ausgewertet werden können. Zusätzlich können die Informationen der Farbbilder verwendet werden.

Die WO 2007/054332 A1 betrifft einen Kamerachip, der Pixelgruppen aufweist, welche mit Hilfe von Shuttersignalen zu verschiedenen Zeiten belichtbar sind.

In der US 2009/0033755 A1 ist ein Bildprozessor beschrieben, mit dem eine kombinierte räumliche und spektrale Analyse durchgeführt wird.

Die CA 2 897 712 A1 bzw. WO 2014/117954 A beschreibt ein System zum Untersuchen von Ohren. Hierbei werden 3D-Informationen erfasst und berücksichtigt.

In der DE 10 2007 027 958 A1 ist ein Stereoskopieverfahren beschrieben, bei dem Disparitätswerte benachbarter Bildpunkte eines Disparitätsbildes geglättet werden.

In der US 2011/0206236 A1 ist ein weiteres Stereoverfahren, bei welchen Disparitäten bestimmt werden.

In der US 5,179,441 A ist ein Stereokamerasystem zum dreidimensionalen Abtasten einer Landschaft beschrieben. Mittels eines Stereo-Korrelationsalgorithmus werden aus dem Bildpaaren der Stereokamera Disparitätsbilder berechnet, um eine Szene dreidimensional abzutasten.

Aus der US 2014/0139642 A1 geht ein Verfahren zum Aufnehmen eines vorbestimmten Bereiches mit mehreren Kameramodulen hervor, die den gleichen Bereich eines Objektes abtasten. Anhand der so erzeugten mehreren Bilder wird ein einheitliches Farbbild (unitary color image) und eine Tiefenkarte (depth map) geschaffen. Zumindest eines der Kameramodule ist eine Bayer-Kamera, die einen Bayer-Filter aufweist. Ein Bayer-Filter ist ein Filter, mit dem die einzelnen Bildpunkte, jeweils mit einer der drei Grundfarben rot, grün und blau gefiltert werden und die Verteilung der Anzahl der roten, grünen und blauen Filter ist so bestimmt, dass sie dem menschlichen Farbempfinden entspricht. Hierdurch wird ein einheitliches Farbbild erhalten das der menschlichen Wahrnehmung entspricht. Das einheitliche Farbbild wird unter Berücksichtigung der Disparitäten aus den Bildern der mehreren Kameramodule zusammengesetzt.

Die US 2009/0268010 A1 offenbart ein Stereokamerasystem für chirurgische Anwendungen.

Der Erfindung liegt die Aufgabe zugrunde, ein Verfahren und eine Vorrichtung zum Abtasten von Oberflächen mit einer Stereokamera zu schaffen, die eine zuverlässige Abtastung von räumlichen Gegenständen erlauben.

Die Aufgabe wird durch die Gegenstände gemäß den unabhängigen Patentansprüchen gelöst. Vorteilhafte Ausgestaltungen sind in den jeweiligen Unteransprüchen angegeben.

Mit dem erfindungsgemäßen Verfahren zum Abtasten von Oberflächen mit einer Stereokamera mit zumindest zwei Kameramodulen, welche jeweils ein Objektiv und einen Bildsensor aufweisen, und derart angeordnet sind, dass sie von einem gemeinsamen Bereich der Oberfläche jeweils ein Bild mit jeweils mehreren Bildpunkten erfassen, wobei die Kameramodule unterschiedliche funktionelle Filter und/oder verschiedenen Kamerasensoren mit unterschiedlichen Empfindlichkeiten aufweisen, werden

- die Disparitäten der Bildpunkte der beiden Bilder bestimmt,
- die Bildpunkte der beiden Bilder unter Berücksichtigung der Disparitäten registriert, und
- das derart registrierte Bildpaar ausgewertet, wobei anhand des registrierten Bildpaares ein Oberflächenspektrum einer abgetasteten Oberfläche bestimmt wird.

Aufgrund der Bestimmung der Disparitäten der beiden Bilder und der Registrierung der beiden Bilder unter Berücksichtigung der Disparitäten werden Verzeichnungen und Verzerrungen in den Bildern aufgrund der unterschiedlichen Blickwinkel der jeweiligen Kameramodule kompensiert, so dass die beiden Bilder des Bildpaares exakt zueinander registriert sind.

Durch die Registrierung wird eine derart gute Zuordnung der Intensitäten zu den Bildpunkten erzielt, dass bei Aufnahme von Farbbildern mittels der Stereokamera diese als Grundlage für eine Spektralanalyse verwendet werden können. Die Durchführung einer Spektralanalyse erfordert, dass die einzelnen überlagerten Bildpunkte des Bildpaars möglichst exakt die Farbwerte der korrespondierenden Punkte des abgetasteten Objektes wiedergeben. Durch die Berücksichtigung der Disparitäten beim Registrieren der Bilder können dreidimensionale Körper zuverlässig aufgenommen werden, wobei die einzelnen Farbwerte eines bestimmten Punktes des abgetasteten Objekts den jeweils korrespondierenden und überlagerten Bildpunkten der jeweiligen Bildpaare zugeordnet werden.

Die einzelnen Kameramodule können mit unterschiedlichen Filtern versehen sein, wie z. B. Farbfilter, Polarisationsfilter, etc., und die hierdurch für die einzelnen Bildpunkte erhaltene Information kann durch die präzise Überlagerung mit den entsprechenden Bildpunkten des jeweils anderen Bildes exakt kombiniert werden.

Aufgrund der Registrierung der Bilder werden unterschiedliche Informationen der zumindest zwei Kameramodule bei der Auswertung kombiniert. Diese unterschiedlichen Informationen unterscheiden sich aufgrund unterschiedlicher optischer Eigenschaften der Kameramodule (unterschiedliche Farbsensitivität, unterschiedliche Polarisationsfilter, etc.).

Bspw. können nach einer Registrierung der Bilder zu dem Bildpaar hieraus ein synthetisches Bild erzeugt werden, dessen Blickrichtung zwischen den Blickrichtungen liegt, mit welchen die einzelnen Bilder aufgenommen worden sind. Ein solches Bild bezeichnet man als Zentralperspektive. Zur Erzeugung einer solchen Zentralperspektive ist es zweckmäßig, dass die beiden Kameramodule möglichst identische optische Eigenschaften besitzen. Aber auch hier ist es zweckmäßig, dass die Bilder gleichzeitig oder quasigleichzeitig aufgenommen werden. Quasigleichzeitig bedeutet hier, dass der zeitliche Abstand zwischen den Aufnahmen der Bilder bzw. der Bildpunkte so gering ist, dass sich die optischen Rahmenbedingungen aufgrund der Beleuchtung und/oder das Objekt nicht ändert. Ist der zeitliche Abstand zu groß, dann kann sich das bzgl. den Kameramodulen bewegte Objekt so weit fortbewegen, dass es bei beiden Bildern unterschiedliche Belichtungssituationen gibt, da die Ausleuchtung mittels einer Beleuchtungseinrichtung ortsabhängig ist. Die Oberfläche des abzutastenden Objektes kann sich verändern, wie z.B. bei glühenden Stahlbrammen im Walzwerk, die beim Abkühlen ihre Farbe ändern. Quasigleichzeitig bedeutet im Sinne der vorliegenden Erfindung, dass der zeitliche Abstand zwischen den Aufnahmen der beiden Bilder so gering ist, dass der zeitliche Versatz keinen Einfluss auf die Auswertung des Bildpaares hat. Hierdurch ist sichergestellt, dass man mit den beiden Kameramodulen das Objekt an den einzelnen Punkten unter den gleichen optischen Rahmenbedingungen betrachtet. Das quasigleichzeitige Aufnehmen der beiden Bilder erlaubt somit die Erfassung unterschiedlicher optischer Informationen mit den beiden Kameramodulen eines an den Kameramodulen vorbei bewegten Objektes, so dass diese Informationen kombiniert ausgewertet werden können.

Bei diesem Verfahren kann zur Bestimmung der Disparitäten in einem ersten der beiden Bilder ein Referenzausschnitt um jeweils einen vorbestimmten zentralen Bildpunkt ausgelesen werden. Dieser Referenzausschnitt wird in einem Bereich um einen Bildpunkt des zweiten Bildes an mehreren Positionen angeordnet, wobei der zentrale Bildpunkt des Referenzausschnitts des zweiten Bildes dem Bildpunkt des ersten Bildes geometrisch entspricht. Mit dem Begriff "geometrisch entspricht" ist gemeint, dass die Bildpunkte der beiden Kameramodule einander entsprechen, wenn sie an einem ebenflächigen Objekt aufgenommen werden würden und über eine entsprechende geometrische Abbildung einander exakt zugeordnet werden würden. In den weiteren Positionen des Referenzausschnittes ist der zentrale Bildpunkt des Referenzausschnittes mit einem Bildpunkt des zweiten Bildes überlagert.

An einer jeden Position des Referenzausschnitts des ersten Bildes im zweiten Bild wird ein Korrelationswert berechnet, der angibt, wie gut bzw. exakt der Referenzausschnitt des ersten Bildes mit dem jeweiligen Bereich des zweiten Bildes übereinstimmt. Es wird die Position des Referenzausschnitts im zweiten Bild ausgewählt, für welche der beste Korrelationswert bestimmt wird, und der Abstand des zentralen Bildpunktes des Referenzausschnittes des ersten Bildes an der ausgewählten Position zum geometrisch entsprechenden Bildpunkt des zweiten Bildes wird als Disparität dem vorbestimmten zentralen Bildpunkt im ersten Bild zugeordnet. Diese Bestimmung der Disparität wird für alle Bildpunkte eines vorbestimmten Bereiches des ersten Bildes wiederholt.

Bei einem Bestimmen der Disparität kann auch eine Näherungsfunktion erstellt werden, die den Zusammenhang zwischen den Abständen und den entsprechenden Korrelationswerten beschreibt, wobei der Abstand des vorbestimmten zentralen Bildpunktes des Referenzausschnittes des ersten Bildes zum geometrisch entsprechenden Bildpunkt des zweiten Bildes als Disparität bestimmt wird, an welcher diese Näherungsfunktion ein Minimum aufweist.

Durch Verwendung dieser Näherungsfunktion kann auch ein Abstand als Disparität bestimmt werden, der nicht einem ganzzahligen Vielfachen des Abstandes zweier benachbarter Bildpunkte einem der Bilder entspricht. Eine solche Disparität kann somit auch außerhalb des Rasters des Bildes liegen.

Als Näherungsfunktionen können beispielsweise Polynome, Splinefunktionen oder dergleichen verwendet werden.

Als Korrelationswert zum Bestimmen der Güte, mit welcher der Referenzausschnitt des ersten Bildes passt, kann die Summe der Quadrate der Differenzen der Intensitätswerte der Bildpunkte oder ein Kreuzkorrelationswert oder ein beliebiges sonstiges Maß für die Übereinstimmung des Referenzausschnittes und des Bildbereiches sein.

Vorzugsweise werden die Bildpunkte der Bilder entsprechend den ihnen zugeordneten Disparitäten verschoben und zur Erzeugung von Bildpunkten in einem regelmäßigen Raster eine Interpolation ausgeführt. Diese beiden Schritte werden vorzugsweise in einem Rechenvorgang ausgeführt. Dieser Rechenvorgang ist beispielsweise eine lineare Interpolation.

Nach einem besonders bevorzugten Aspekt der vorliegenden Erfindung werden Kameramodule verwendet, die unterschiedliche Farbfilter aufweisen, so dass die einzelnen Kameramodule Farbbilder in unterschiedlicher Farbe aufnehmen. Mit dem Begriff "Farbe" werden hier vorbestimmte spektrale Bereiche bezeichnet. Die einzelnen Farbbilder können in Merkmalsbilder gewandelt werden, indem einzelne Bildpunkte der Farbbilder in skalare Intensitäten umgesetzt werden, bevor diese Merkmalsbilder verwendet werden, um die Disparitäten zu bestimmen.

Die Intensitäten der Bildpunkte der Merkmalsbilder geben jeweils den Helligkeitsbeitrag der jeweiligen Bildpunkte der Farbbilder in einem Pseudo-Graustufenbild wieder. Hierdurch können die Bildpunkte der einzelnen Merkmalsbilder durch Skalare beschrieben werden, die vergleichbare Intensitäten darstellen. Die mit den Kameramodulen erfassten Farbbilder können vektorielle Bildpunkte mit mehreren unterschiedlichen Farbintensitäten (z. B.: RGB) umfassen.

Für die Durchführung der Bestimmung der Disparitäten in Echtzeit ist es eine wesentliche Vereinfachung, wenn die Farbbilder in Merkmalsbilder umgesetzt werden, wobei den einzelnen Bildpunkten skalare Intensitäten zugeordnet sind.

Die Umwandlung der Farbbilder in Merkmalsbilder kann mittels Transformationsvektoren ausgeführt werden, welche Gewichtungswerte umfassen, die jeweils das Gewicht der einzelnen Farbe für die skalare Intensität wiedergeben.

Diese Gewichtungswerte können anhand von physikalischen Modellen des Bildaufnahmeprozesses bestimmt werden. Andererseits ist es auch möglich, die Gewichtungswerte statistisch anhand von mit den Kameramodulen aufgenommenen Bildern von vorbestimmten Objekten, deren Zuordnung der Bildpunkte in den beiden Bildern bekannt ist, zu erstellen.

• Die Transformationsvektoren können auch an die jeweils abzutastende Oberfläche angepasst werden. Wenn die Tranformationsvektoren an die jeweils abzutastende Oberfläche angepasst werden sollen, dann muss dies sehr schnell und vorzugsweise in Echtzeit erfolgen. Bei der oben angegebenen statistischen Bestimmung der Gewichtungswerte des Transformationsvektors werden vordefinierte Kalibriebilder mit den Kameramodulen abgetastet, wobei in der Regel das gesamte erfasste Bild ausgewertet wird. Dieses statistische Verfahren kann dahingehend abgewandelt werden, dass nicht vordefinierte Kalibrierbilder sondern der an zu untersuchenden Objekten erfassten Bilder auch zum Anpassen der Transformationsvektoren verwendet werden. Hierbei werden nicht alle Bildpunkte verwendet, sondern lediglich Bildpunkte, die zu sogenannten unüberwachten Merkmalen gehören. Als unüberwachte Merkmale werden Punkte in ähnlichen Bildern bezeichnet, die zueinander korrespondieren. Es gibt Verfahren, die derartige unüberwachte Merkmale extrahieren. Werden lediglich Bildpunkte von unüberwachten Merkmalen, bzw. die benachbart zu unüberwachten Merkmalen angeordnet sind und ähnliche Farbintensitäten aufweisen, ausgewertet, dann können die Gewichtungswerte der Transformationsvektoren sehr schnell ermittelt werden, so dass es auch möglich ist, die Transformationsvektoren individuell an unterschiedliche abzutastende Oberflächen während des Betriebs anzupassen.

Mit dem registrierten Bildpaar kann ein Oberflächenspektrum der abgetasteten Oberfläche bestimmt werden.

Vorzugsweise sind die mit den Kameramodulen erfassten Bilder eindimensionale Bilder. Die Bestimmung der Disparitäten und die Registrierung der Bildpaare erfolgt dann lediglich in der Längsrichtung der Bilder. Grundsätzlich ist dieses Verfahren jedoch auch für zweidimensionale Bilder geeignet.

Die Kameramodule können eine Zeilenkamera aufweisen, mit mehreren unterschiedlichen Sensorzeilen, wobei mit einer jeden Sensorzeile ein separates Zeilenbild erfasst wird. Die einzelnen Zeilenbilder werden mittels einer geometrischen Abbildung überlagert.

Vorzugsweise ist der Bildsensor eines jeden Kameramoduls ein Referenzausschnitt eines Bildsensorchips. Hierdurch sind die einzelnen Kameramodule bei einem Flächensensorchip in der Ebene zueinander ausgerichtet und bei einem Zeilensensor in Zeilenrichtung zueinander ausgerichtet, wenn die Objektive der Kameramodule keine Verzeichnung aufweisen und der Bildsensorchip exakt zur Abtastrichtung ausgerichtet ist.

Vorzugsweise werden mehrere Kameramodule verwendet, wobei zumindest eines der Kameramodule Bestandteil zweier Stereokameras ist. Die einzelnen Kameramodule bilden somit paarweise jeweils eine Stereokamera. Bei vier Kameramodulen, die linear entlang einem Zeilensensorchip ausgebildet sind, sind somit drei Stereokameras vorgesehen. Die vier Kameramodule können auch als sechs Stereokameras verwendet werden, wobei die Bilder paarweise registriert werden.

Anhand der Disparitäten kann ein Höhenprofil der abgetasteten Oberfläche bestimmt werden.

Eine erfindungsgemäße Vorrichtung bzw. Mehrfachkamera zum Abtasten von Oberflächen umfasst zumindest eine Stereokamera mit zumindest zwei Kameramodulen, welche jeweils ein Objektiv und einen Bildsensor aufweisen, und derart angeordnet sind, dass sie von einem gemeinsamen Bereich einer abzutastenden Oberfläche jeweils ein Bild erfassen, wobei die Vorrichtung eine Steuereinrichtung aufweist, die zum Ausführen eines der oben erläuterten Verfahren ausgebildet ist.

Die Vorrichtung weist vorzugsweise eine Beleuchtungseinrichtung auf, die den abzutastenden Bereich ausleuchtet.

Weiterhin kann die Vorrichtung mit einer Bewegungseinrichtung zum relativen Bewegen der abzutastenden Oberfläche und der Stereokamera versehen sein.

Die Vorrichtung kann auch mehrere Stereokameras aufweisen.

Die einzelnen Kameramodule weisen unterschiedliche funktionelle Filter, wie z. B. unterschiedlichen Farbfilter, Polarisationsfilter oder dergleichen, und/oder verschiedenen Kamerasensoren mit unterschiedlichen Empfindlichkeiten (unterschiedliche Sensitivität, unterschiedliche Farbe, z.B. einmal RGB und einmal Infrarot) auf. Die Kameramodule besitzen somit unterschiedliche optische Eigenschaften. Das Erfassen bestimmter Punkte eines Objektes und das Registrieren der entsprechenden Bildpunkte macht vor allem dann Sinn, wenn die diese Punkte bzw. die die Bildpunkte enthaltenden Bilder gleichzeitig oder quasigleichzeitig erfasst werden, so dass sie Informationen zum selben Punkt des abzutastenden Objektes zur selben Zeit enthalten. Dann können die Informationen in der Auswertung miteinander kombiniert werden, da man dann gleichzeitig vom selben Ort bzw. Punkt eines abzutastenden Objektes unterschiedliche optische Informationen erhält.

Vorzugsweise sind die Bildsensoren der einzelnen Kameramodule jeweils unterschiedliche Abschnitte eines gemeinsamen Sensorchips.

Der Bildsensor der Kameramodule kann ein Zeilensensor oder ein Flächensensor sein.

Wie es oben bereits ausgeführt ist, werden die registrierten Bildpaare zur Spektralanalyse verwendet, wenn es sich hierbei um Farbbilder handelt. Hierbei werden insbesondere Kameramodule mit unterschiedlichen spektralen Empfindlichkeiten und/oder unterschiedlichen Farbfiltern verwendet. Hierdurch wird die zur Verfügung stehende Farbinformation erweitert.

Mit den registrierten Bildpaaren stehen einerseits Informationen über die dreidimensionale Form der abgetasteten Gegenstände anhand der ermittelten Disparitäten als auch herkömmliche Bildinformationen als ebenflächiges Graustufen- oder Farbbild zur Verfügung. Die registrierten Bilder können deshalb auch zum Abtasten bedruckter dreidimensionaler Gegenstände verwendet werden, um einerseits die Bildinformation an sich zu untersuchen und andererseits die Position der Bildinformation bezüglich der Position der Gegenstände zu bestimmen. Ein typisches Beispiel für eine solche Anwendung ist die Abtastung von einer Computertastatur. Die Computertastatur umfasst eine Vielzahl von Tasten. Jede einzelne Taste ist mit einem Druckbild bedruckt. Bei der Produktion muss automatisch überprüft werden, ob die Druckbilder auf den jeweiligen Tasten korrekt positioniert sind. Da mit der erfindungsgemäßen Kamera die Information von der Form der Gegenstände als auch die Bildinformation der auf den jeweiligen Tasten gedruckten Bilder vorliegen, kann die korrekte Positionierung der einzelnen Druckbilder auf den jeweiligen Tasten überprüft werden. Tasten werden üblicherweise mit weißer oder schwarzer Farbe bedruckt, so dass für diese Anwendung auch Kameramodule geeignet sind, die lediglich in schwarz/weiß die Oberflächen abtasten.

Weiterhin kann das erfindungsgemäße Verfahren dazu verwendet werden, optische Eigenschaften, die winkelabhängig sind, zu analysieren, da man aufgrund der zumindest zwei Kameramodule aus zwei unterschiedlichen Blickrichtungen (zwei unterschiedliche Winkel) auf jeweils einen bestimmten Punkt des Objektes blickt. Durch die Registrierung der Bilder ist sichergestellt, dass die beiden Kameramodule auf exakt den gleichen physikalischen Punkt des Objektes blicken. Winkelabhängige optische Eigenschaften sind beispielsweise die bidirektionale Reflektionsfunktion, insbesondere die Verteilung der Leuchtdichte, Glanzwerte oder Rauheit.

Wird ein Produktionsprozess überwacht, bei dem Objekte mit einer begrenzten Menge vorbestimmter unterschiedlicher Oberflächen hergestellt werden, dann können diese Oberflächen anhand winkelabhängiger optischer Eigenschaften eindeutig identifiziert werden. Dies gilt insbesondere für die Metallverarbeitung, bei welcher gefräste, geschliffene, beschichtete, perlbestrahlte und unbehandelte Oberflächen vorkommen können. Diese Oberflächen haben unterschiedliche optische Reflektionseigenschaften, die oftmals winkelabhängig sind. Mit dem erfindungsgemäßen Verfahren können diese unterschiedlichen Typen von Oberflächen sehr schnell und sehr zuverlässig detektiert und unterschieden werden.

Zusammenfassend kann man festhalten, dass mit dem erfindungsgemäßen Verfahren Objekte abgetastet werden können, wobei gleichzeitig mit hoher Präzision die Form und die Farbe (schwarz/weiß, Graustufen, Farbbild) erfasst werden können, wobei durch die Registrierung der Bilder sowohl die Form- als auch die Farbinformation jeweils sehr präzise den jeweiligen Bildpunkten zuordenbar ist.

Aufgrund der Registrierung der Bilder ist das Verfahren so präzise, dass es auch kalibriert werden kann, so dass die abgetasteten Objekte vermessen werden können. Es können vor allem sehr präzise Abmessungen in einer Ebene etwa senkrecht zu den optischen Achsen der Kameramodule bestimmt werden.

Die Erfindung wird nachfolgend beispielhaft anhand der Zeichnungen näher erläutert. Die Zeichnungen zeigen in:

Figur 1    schematisch eine Vorrichtung zum Abtasten von Oberflächen mit einer Vierfach-Kamera in einer perspektivischen Ansicht,

Figur 2    ein Schema zum Ermitteln von Disparitäten in einem mit der in Fig. 1 gezeigten Kamera aufgenommenen Bild,

Figur 3    jeweils zwei Testkonturen, mit welchen Registrierungsfehler ermittelt worden sind, und

Figur 4    ein Verfahren zum Abtasten einer Oberfläche in einem Flussdiagramm.

Die Erfindung wird im Folgenden anhand eines Ausführungsbeispiels einer optischen Abtastvorrichtung 1 mit einer Vierfach-Kamera 2 erläutert. Die Abtastvorrichtung 1 weist neben der Kamera 2 eine zeilenförmige Lichtquelle 3, eine Steuereinrichtung 4 und einen Bewegungsdetektor 5 auf.

Mit dem Bewegungsdetektor 5 wird die Bewegung eines Förderbandes 6 erfasst, mit welchem optisch abzutastende Produkte in Förderrichtung 7 bewegt werden. Anstelle eines Förderbandes kann auch ein bandförmiges Produkt entlang der Abtastvorrichtung 1 bewegt werden.

Grundsätzlich ist es auch möglich, dass die Abtastvorrichtung 1 bewegt wird und die abzutastende Oberfläche stillsteht.

Die Kamera 2 weist vier Kameramodule 8, 9, 10, 11 auf. Ein jedes Kameramodul 8, 9, 10, 11 ist aus einem Objektiv 12 und einem Bildsensor (nicht dargestellt) ausgebildet. Ein jedes Kameramodul 8, 9, 10, 11 weist einen Farbfilter auf, wobei sich die Farbfilter der unterschiedlichen Kameramodule in der Farbe jeweils unterscheiden. Anstelle eines Farbfilters kann auch ein Polarisationsfilter oder ein anderer Filter, der nur bestimmtes Licht durchlässt, vorgesehen sein. Im vorliegenden Ausführungsbeispiel sind Farbfilter für die Farben vorgesehen. Vorzugsweise sind die unterschiedlichen Filter so ausgebildet, dass deren spektrale Transmissionsbereiche sich zumindest teilweise überlappen. Ein solcher Überlapp bewirkt, dass die unterschiedlichen Bilder übereinstimmende Informationen enthalten, was eine unten näher erläuterte Merkmalstransformation der Bilder erleichtert, bei der Farbbilder in Merkmalsbilder umgewandelt werden.

Die Kamera weist einen einzigen Zeilensensorchip auf, wobei Abschnitte dieses Zeilensensorchips den jeweiligen Bildsensor für die jeweiligen Kameramodule 8, 9, 10, 11 bilden.

Der Zeilensensorchip umfasst drei parallel nebeneinander angeordnete Sensorzeilen, die jeweils in einer der Farben Rot, Grün und Blau empfindlich sind. Die Spektralbereiche der einzelnen Sensorzeilen erstrecken sich etwa über die Bereiche 400 nm - 550 nm (Blau), etwa 450 nm - 600 nm (Grün) und etwa 550 nm - 700 nm (Rot).

Die vier Kameramodule 8, 9, 10, 11 sind derart ausgerichtet, dass sie alle einen gemeinsamen Bereich des Förderbandes 6 erfassen. Dieser gemeinsame Bereich ist eine quer zur Förderrichtung 7 verlaufende Sichtlinie 13.

Die Lichtquelle 3 ist als Leuchtdiodenzeile ausgebildet. Sie ist vorzugsweise derart angeordnet, dass sie die Sichtlinie 13, die von einer Kamera 2 erfasst wird, unter einem Winkel von etwa 30° bis 60° gegenüber der Oberfläche des Förderbandes 6 ausleuchtet. Die Leuchtdioden sind vorzugsweise zum Abstrahlen von weißem Licht ausgebildet. Die Lichtquelle 3 ist vorzugsweise so ausgebildet, dass sie Licht über den gesamten Spektralbereich aussendet, in dem die Kamera empfindlich ist. Im vorliegenden Ausführungsbeispiel deckt die Lichtquelle den Spektralbereich von etwa 400 nm bis 700 nm ab.

Es können auch mehrere Lichtquellen vorgesehen sein, die beispielsweise Licht mit unterschiedlichen Spektralbereichen emittieren. Unterschiedliche Lichtquellen können auch als Hellfeldbeleuchtung und/oder als Dunkelfeldbeleuchtung ausgebildet sein. Die unterschiedlichen Lichtquellen können abwechselnd das Objekt ausleuchten. Dies wird auch als Multiplexbeleuchtung bezeichnet. Eine solche Multiplexbeleuchtung ist bspw. in der noch nicht veröffentlichten deutschen Patentanmeldung DE 10 2015 105 656.9 beschrieben.

Nachfolgend wird ein Verfahren erläutert, bei dem die oben beschriebene Abtastvorrichtung 1 verwendet wird, um eine sich in Förderrichtung 7 bewegende Oberfläche abzutasten. Das Verfahren wird zur Vereinfachung der Erläuterung lediglich anhand zweier Kameramodule erläutert, die eine Stereokamera bilden. Das Verfahren ist auf eine Mehrfach-Kamera mit einer an sich beliebigen Anzahl von Kameramodulen erweiterbar.

Das Verfahren beginnt mit dem Schritt S1.

Mit den beiden Kameramodulen 8, 9 werden mehrere aufeinanderfolgende Zeilenbilder der sich in Förderrichtung 7 bewegenden Oberfläche des Förderbandes 6 bzw. von auf dem Förderband 6 befindlichen Produkten erfasst (Schritt S2). Die jeweilige Bildaufnahme eines Zeilenbildes wird mittels des Bewegungsdetektors 5 derart gesteuert, dass die einzelnen Zeilenbilder von gleichmäßig beabstandeten Sichtlinien 13 auf der abzutastenden Oberfläche erfasst werden. Die einzelnen Zeilenbilder werden zu einem farbigen oder mehrkanaligen Flächenbild zusammengesetzt, wobei mit dem Kameramodul 8 ein erstes Flächenbild und mit dem Kameramodul 9 ein zweites Flächenbild erzeugt wird. Ein mehrkanaliges Flächenbild enthält an den einzelnen Bildpunkten mehrere Intensitätswerte, die aus den Intensitäten unterschiedlicher Farbkanäle stammen. Diese mehreren Intensitäten können aber müssen nicht ein Farbbild ergeben.

Mit den Kameramodulen 8, 9 werden spektral unterschiedliche mehrkanalige Zeilenbilder aufgenommen, wobei jedem Bildpunkt ein Vektor bestehend aus mehreren Farbintensitätswerten zugeordnet ist, die im vorliegenden Beispiel jeweils einen Farbintensitätswert für die Farbe Rot, einen für die Farbe Blau und einen für die Farbe Grün umfassen. Diese Zeilenbilder werden in Merkmalsbilder umgesetzt (Schritt S3), wobei in den Merkmalsbildern den einzelnen Bildpunkten skalare Intensitäten zugeordnet sind.

Die Umwandlung der Zeilenbilder in Merkmalsbilder wird mittels einer Transformation ausgeführt, welche die Farbintensitätswerte in Helligkeitswerte eines Pseudo-Graustufenbildes umsetzt. Die einzelnen Bildpunkte des Merkmalsbildes werden durch Skalare beschrieben, die vergleichbare Intensitäten darstellen.

Die Umwandlung der Farbbilder in Merkmalsbilder wird mittels Transformationsvektoren ausgeführt, welche Gewichtungswerte umfassen, die jeweils das Gewicht der einzelnen Farbintensität für die skalare Intensität wiedergeben. Die Vektortransformationen mit dem Transformationsvektoren $a_0$, $a_1$ erfüllen folgende Formel:

$$\arg_{a1} \min \| W_1 a_1 - W_0 a_0 \|_E$$

wobei $a_1$ der Transformationsvektor des zweiten Bildes, $W_1$ die Menge der Farbintensitätsvektoren des zweiten Bildes, $a_0$ der Transformationsvektor für das erste Bild

und $W_0$ die Menge der Farbintensitätsvektoren des ersten Bildes darstellen. Zunächst wird einer der beiden Transformationsvektoren unabhängig vom anderen Transformationsvektor berechnet. Hierzu wird zumindest ein vorbestimmtes Kalibrierbild mit den Kameramodulen erfasst. Von dem Kalibrierbild sind die Farbwerte bekannt. Mit der Transformation soll die im Bild enthaltene Information maximal erhalten werden. Beispielsweise wird der Transformationsvektor derart berechnet, dass die Varianz des Farbbildes erhalten bleibt. Alternativ ist es beispielsweise auch möglich, den Transformationsvektor bzw. die Transformation derart zu berechnen, dass der Kontrast möglichst erhalten bleibt. Der zweite Transformationsvektor bzw. die zweite Transformation wird dann anhand des ersten Transformationsvektors und obiger Formel ermittelt.

Die oben angegebene Formel bedeutet, dass die Farbintensitätsvektoren des ersten Bildes mit dem Transformationsvektor des ersten Bildes transformiert werden und die Farbintensitätsvektoren des zweiten Bildes mit dem Farbintensitätsvektor des zweiten Bildes transformiert werden, wobei die euklidische Differenz zwischen den Farb-intensitätsvekoren der jeweiligen Bildpunkte gebildet wird und die Transformationsvektoren derart gewählt werden, dass die Summe der euklidischen Differenzen ein Minimum ergibt. Dies bedeutet mit anderen Worten, dass die Transformationen der beiden Bilder so ausgebildet sind, dass die jeweils transformierten Bilder sich möglichst ähnlich sind, d. h. möglichst wenige Differenzen bestehen. Diese Transformationen sind daher nicht derart ausgebildet, um ein möglichst für das menschliche Auge natürliches Graustufenbild zu erzeugen, sondern um Graustufenbilder zu erzeugen, die möglichst identisch sind. Deshalb wird das Merkmalsbild auch als Pseudo-Graustufenbild bezeichnet.

Die Transformationsvektoren können durch numerische Lösung des oben angegebenen Minimierungsproblems ermittelt werden, wobei tatsächlich gemessene Farbintensitätsvektoren eingesetzt werden.

Bei obigem Beispiel wird eine lineare Transformation verwendet. Im Rahmen der Erfindung können selbstverständlich auch nichtlineare Transformationen verwendet werden. Weiterhin kann man anstelle der euklidischen Norm auch jedes andere Maß nehmen, mit welchem sich ein Abstand zwischen zwei Vektoren bzw. eine entsprechende Fehlerfunktion darstellen und minimieren lässt.

Alternativ ist es auch möglich anstelle einer solchen empirischen Ermittlung der Transformationsvektoren ein numerisches Modell der Kameramodule zu verwenden, das die Umsetzung des empfangenen Lichts durch die Filter und die Bildsensoren beschreibt. Die Einflüsse der einzelnen Komponenten der Kameramodule auf das empfangene Licht sind bekannt. Bei Verwendung eines numerischen Modells wird eine der beiden Transformationen bezüglich der Varianz aller möglichen Kameraantworten optimiert und die andere Transformation daran angeglichen, wie es oben bei der empirischen Ermittlung der Transformationsvektoren erläutert ist. Bei der empirischen Ermittlung der Transformationsvektoren werden hingegen nur bestimmte, gemessene Farbwerte berücksichtigt.

Die Umsetzung der Farbbilder in Merkmalsbilder erleichtert die nachfolgend erläuterte Bestimmung der Disparitäten.

Es werden die Disparitäten des ersten Flächenbildes zum zweiten Flächenbild berechnet (Schritt S4). Hierzu wird im ersten Flächenbild ein Referenzausschnitt 14 um einen Bildpunkt $F_0(x,y)$ ausgewählt. Im vorliegenden Ausführungsbeispiel ist der Referenzausschnitt 14 quadratisch mit einer Seitenlänge von b. Dieser Referenzausschnitt 14 wird in einem Suchfenster 15 des zweiten Flächenbildes an mehreren Positionen derart überlagert, dass jeweils der zentrale Bildpunkt $F_0(x,y)$ des Referenzausschnitts mit einem Bildpunkt $F_1(x,y)$ des ersten Flächenbildes überlagert ist. Wäre die abzutastende Oberfläche exakt ebenflächig, die Kameramodule mit ihren optischen Achsen exakt senkrecht auf diese Oberfläche ausgerichtet, die einzelnen Kameramodule verzeichnungs- und verzerrungsfrei und die spektralen Sensitivitäten der Kameramodule identisch, dann könnten mit den mehreren Kameramodulen Bilder des gemeinsamen Bereichs der abzutastenden Oberfläche erfasst werden, die lediglich mit einer linearen Verschiebung exakt in Deckung gebracht werden könnten, wobei alle Bildpunkte der einzelnen Bilder exakt die Farb- bzw. Lichtintensität desselben Bildpunktes der abzutastenden Oberfläche wiedergeben würden. Diese fiktiven Positionen der Bildpunkte werden im Folgenden als geometrischer Ort bezeichnet, d. h. der Ort auf der abzutastenden Oberfläche für den jeweiligen Bildpunkt, der sich ohne Verzerrung und ohne Verzeichnung bei einer ebenflächigen Oberfläche ergeben würde. Da bei der vorliegenden Kamera die Teilbilder der einzelnen Farben zunächst rektifiziert werden, um der Epipolar-Bedingung zu entsprechen, kann der Referenzausschnitt 14 in y-Richtung exakt mit der korrespondierenden Position des Suchfensters 15 in y-Richtung überlagert werden.

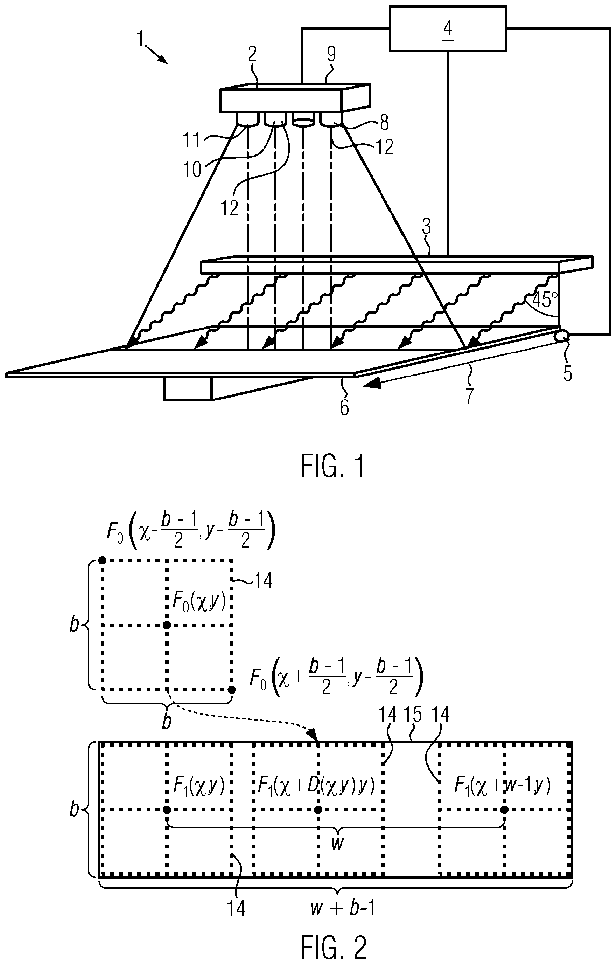

In Zeilenrichtung bzw. in Richtung entlang der Sichtlinie 13 werden hingegen bei unterschiedlichen Höhen der Oberfläche erhebliche Verzerrungen bzw. Abweichungen der Bildpunkte von ihrem geometrischen Ort verursacht. Der Referenzausschnitt 14 wird deshalb in Zeilenrichtung bzw. x-Richtung im Suchfenster 15 an mehreren Positionen derart angeordnet, dass jeweils der zentrale Bildpunkt des Referenzausschnittes 14 mit einem Bildpunkt des Suchfensters 15 in Deckung gebracht ist, wobei die beiden Bildpunkte den gleichen y-Wert aufweisen. Die Verschiebung des Referenzausschnittes 14 gegenüber dem geometrischen Ort des Referenzausschnittes im Suchfenster 15 ist als $D(x,y)$ in Fig. 2 angegeben. Diese Verschiebung $D(x,y)$ wird auch als Abstand vom geometrischen Ort bezeichnet.

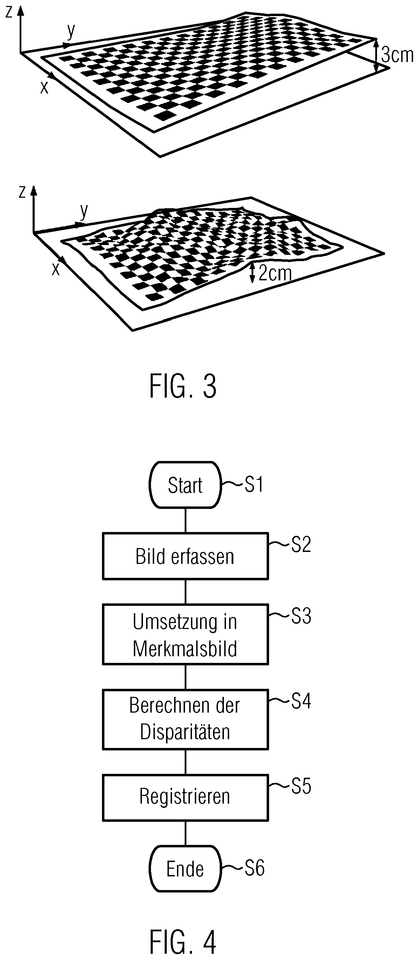

Die Anzahl der Bildpunkte, über welche im Suchfenster 15 der Referenzausschnitt 14 in Deckung gebracht wird, ist in Fig. 4 mit w bezeichnet.

Die Kantenlänge b des Referenzausschnittes 14 beträgt 11 bis 29 Bildpunkte und insbesondere 19 bzw. 21 Bildpunkte. Die Anzahl der Bildpunkte w, mit welchen der Referenzausschnitt 14 in Deckung gebracht wird, beträgt vorzugsweise zumindest 10, insbesondere zumindest 20, zumindest 40 oder zumindest 50 und vorzugsweise zumindest 100 oder zumindest 300 oder insbesondere zumindest 500.

Die Breite des Suchfensters beträgt w+b-1 (Fig. 2). Die Kantenlänge b des Referenzausschnitts 14 ist vorzugsweise nicht größer als ein Drittel der Breite des Suchfensters 15 und insbesondere nicht größer als ein Viertel bzw. ein Fünftel und vorzugsweise nicht größer als ein Zehntel der Breite des Suchfensters.

Für eine jede Position des Referenzausschnitts 14 im Suchfenster 15 wird ein Korrelationswert berechnet. Der Korrelationswert ist ein Maß, wie gut die Bildpunkte des Referenzausschnitts 14 des ersten Flächenbildes mit den Bildpunkten des zweiten Flächenbildes, von welchen sie überlagert sind, übereinstimmen. Als Korrelationswert kann beispielsweise die Summe der quadratischen Abstände (SSD: sum of squared difference) verwendet werden. Je geringer dieser Wert ist, desto besser ist die Übereinstimmung. Als Korrelationswert ist auch jede andere Metrik geeignet, die den Unterschied zweier Vektoren beschreibt. Dies können beispielsweise der euklidische Abstand oder ein Kreuzkorrelationswert sein. Weitere geeignete Metriken sind ZNCC (Zero mean Normalized Cross-Correlation), adaptives Binärfenster (adaptive binary window), POC (Phase-Only Correlation), Three-Moded Census, geführter Bildfilter (guided image filter) oder ein minimal spannender Baum (minimum spanning tree).

Die Position des Referenzausschnitts 14 im Suchfenster 15, die den besten Korrelationswert aufweist, wird zur Bestimmung der Disparität ausgewählt. Der Abstand $D(x,y)$ des Referenzausschnitts 14 an dieser Position stellt den entsprechenden Disparitätswert dar, der dem entsprechenden Bildpunkt $F_0(x,y)$ im ersten Flächenbild zugeordnet wird.

Diese Bestimmung der Disparität wird für alle Bildpunkte des ersten Flächenbildes innerhalb eines vorbestimmten, relevanten Bereichs wiederholt. Alternativ kann auch das Suchfenster am Rand durch weitere fiktive Bildpunkte, insbesondere schwarze Bildpunkte, ergänzt werden, so dass das Zentrum des Referenzausschnitts 14 mit einem jeden Bildpunkt des Suchfensters in Deckung gebracht werden kann.

Bei dem oben erläuterten Verfahren werden die Disparitäten zwischen dem ersten und zweiten Flächenbild bestimmt (Schritt S4).

Sind die Disparitäten bestimmt, dann werden die ursprünglichen Farbbilder gemäß den Disparitäten transformiert, d. h. die Farbbildintensitäten werden um die Disparitäten verschoben. Da die Farbbildintensitäten bzw. Farbbildwerte in einem regelmäßigen Raster angeordnet sein sollen, wird eine Interpolation durchgeführt, mit welcher jedem Bildpunkt im regelmäßigen Raster die entsprechenden Bildintensitätswerte zugeordnet werden. Diese transformierten Farbbilder sind somit bezüglich der Verschiebung der Farbintensitäten derart kompensiert, dass in den transformierten Farbbildern an den Bildpunkten jeweils gleicher Position in den Farbbildern die entsprechenden Farbintensitäten enthalten sind, die mittels des jeweiligen Kameramoduls von derselben Position der abzutastenden Oberfläche erfasst worden sind.

Dieses Transformieren der Farbbilder gemäß den Disparitäten wird als Registrieren bezeichnet (Schritt S5). Dadurch, dass alle Farbintensitäten bzw. Graustufen der ursprünglichen Bilder registriert werden, wird keine Information (mit Ausnahme von Rundungsfehlern) verloren. Die korrespondierenden Bildpunkte in den unterschiedlichen Bildern der unterschiedlichen Kameramodule enthalten somit die Farbbildintensitäten, die mit dem jeweiligen Kameramodul von exakt dem gleichen physikalischen Punkt des Objektes abgetastet worden sind. Hierdurch lassen sich die Informationen der mit den unterschiedlichen Kameramodulen aufgenommenen Bilder sehr gut gemeinsam auswerten.

Nachdem die Farbbilder registriert worden sind, wird das Verfahren in Schritt S6 beendet.

Das oben erläuterte Verfahren kann auch dahingehend abgewandelt werden, dass nach Bestimmung der Korrelationswerte zwischen den Referenzausschnitten 14 und den entsprechenden Bereichen im Suchfenster 15 und der entsprechenden Abstände D zunächst eine Näherungsfunktion ermittelt wird, die den Zusammenhang zwischen den Abständen D und den Korrelationswerten wiedergibt. Von dieser Näherungsfunktion wird das Minimum für den Korrelationswert bestimmt. Dieses Minimum kann auch außerhalb des Rasters der Bildpunkte des Suchfensters liegen. Hiermit können somit auch Disparitäten ermittelt werden, die nicht ein Vielfaches des Abstandes zweier benachbarter Bildpunkte des Suchfensters betragen. Die derart ermittelten Disparitäten werden dann den entsprechenden Bildpunkten des Flächenbildes zugeordnet, aus denen der Referenzausschnitt 14 stammt. Hierdurch wird die Genauigkeit der Disparitäten verbessert.

Dieses Verfahren wurde auf zwei räumlich konturierte Schachbrettmuster, wie sie in Fig. 3 dargestellt sind, angewandt. Von bestimmten Referenzpunkten wird geometrisch der Ort erfasst. Die euklidischen Abstände der Referenzpunkte werden berechnet und mit den ermittelten Disparitäten verglichen. Die mit obigem Verfahren ermittelten Disparitäten stimmten im Wesentlichen mit den geometrisch ermittelten Abständen überein. Die maximale Abweichung betrug 0,42 des Abstandes zwischen zwei benachbarten Bildpunkten.

Mit dem oben erläuterten Ausführungsbeispiel kann eine Spektralanalyse durchgeführt werden. Die vier Kameramodule 8 bis 11 erzeugen jeweils drei Farbkanäle, so dass insgesamt zwölf Farbkanäle für die Spektralanalyse zur Verfügung stehen.

Bei der Spektralanalyse wird das Oberflächenspektrum der Bildpunkte über den gesamten erfassten spektralen Bereich rekonstruiert. Im vorliegenden Ausführungsbeispiel erstreckt sich der spektrale Bereich von 400 nm bis 700 nm. Je nach Ausbildung der Lichtquelle und der Kameramodule können auch andere spektrale Bereiche vorgesehen sein, die auch Infrarotlicht und/oder UV-Licht umfassen können.

Bei dem oben erläuterten Verfahren werden einmal vorab ermittelte Transformationsvektoren unverändert eingesetzt. Im Rahmen der Erfindung ist es auch möglich, die Transformationsvektoren an die jeweils abzutastende Oberfläche anzupassen.

Um die Transformationsvektoren an die jeweils abzutastende Oberfläche anzupassen, werden unüberwachte Merkmale der korrespondierenden Bilder ermittelt. Hierzu sind Standardverfahren bekannt, wie z.B. SURF (Speed Up Robust Function), mit welchen schnell und robust korrespondierende Bildpunkte in ähnlichen Bildern ermittelt werden können.

Die Merkmalsvektoren der Bildpunkte der unüberwachten Merkmale werden verglichen und die jeweils ähnlichsten Vektoren werden als korrespondierende Bildpunkte ausgewählt.

In einem weiteren Schritt werden Bildbereiche um diese korrespondierenden Bildpunkte in den Bildern ausgewählt. Hierzu wird beispielsweise der mean shift Algorithmus (Cheng, Yizong (August 1995). "Mean Shift, Mode Seeking, and Clustering". IEEE Transactions on Pattern Analysis and Machine Intelligence (IEEE) 17 (8): 790-799, oder https://en.wikipedia.org/wiki/Mean_shift) verwendet.

Anhand der Farbwerte der in diesen Bildbereichen enthaltenen Bildpunkte wird die Merkmalstransformation bestimmt. Da nur ausgewählte Farbwerte von relativ wenigen Bildpunkten verwendet werden, lassen sich die Transformationsvektoren sehr schnell bestimmen, so dass sie in Echtzeit an unterschiedliche abzutastende Oberflächen angepasst werden können.

Das oben erläuterte Ausführungsbeispiel der Vierfach-Kamera wird für die Multispektralanalyse verwendet. Ein jedes Kameramodul 8, 9, 10, 11 erzeugt drei Farbkanäle. Für die Multispektralanalyse stehen somit zwölf Farbkanäle zur Verfügung. Dieses Verfahren wird vor allem zur Überwachung von bedruckten Papierbahnen verwendet. Mit dieser Vierfach-Kamera kann die Papierbahn sehr einfach, schnell, präzise und zuverlässig überwacht werden.

Da durch die Bestimmung der Disparitäten auch Informationen über die dreidimensionale Form des abgetasteten Objektes vorliegen, können die mit einer solchen Mehrfach-Kamera erfassten Bilder auch anders ausgewertet werden. Eine solche Mehrfach-Kamera kann insbesondere auch zur Überwachung und Kontrolle von bedruckten dreidimensionalen Gegenständen verwendet werden, wobei zunächst die Form der Gegenstände anhand der Disparitäten bestimmt wird und danach das Druckbild überprüft wird. Durch die Berücksichtigung der Form kann bestimmt werden, ob das Druckbild an dem überwachten Gegenstand korrekt positioniert ist. Weiterhin kann anhand der ermittelten Form der Neigungswinkel der abgetasteten Oberfläche bezüglich der von der Lichtquelle ausgesendeten Lichtstrahlung bestimmt werden und dieser bei der Bestimmung optischer Eigenschaften des abgetasteten Objektes mit berücksichtigt werden. Dieser Neigungswinkel hat einen erheblichen Einfluss auf die Reflektion der einfallenden Lichtstrahlen. Auch der Abstand der Oberfläche von den Kameramodulen hat einen erheblichen Einfluss auf die spektrale Farbmessung. Dieser Abstand kann anhand der Disparitäten bestimmt werden und auch bei der Bestimmung der optischen Eigenschaften des abgetasteten Objektes mit berücksichtigt werden. Werden Reflektionseigenschaften des abgetasteten Objektes bestimmt, dann ist es somit zweckmäßig die Neigung der Oberfläche des abzutastenden Objektes bezüglich der Lichtstrahlung und/oder den Abstand der Kameramodule zum Objekt mit zu berücksichtigen.

Die Erfindung kann folgendermaßen zusammengefasst werden:
Die Erfindung betrifft ein Verfahren und eine Vorrichtung zum Abtasten von Oberflächen mit einer Stereokamera, mit zumindest zwei Kameramodulen, welche jeweils ein Objektiv und einen Bildsensor aufweisen. Die Kameramodule sind derart angeordnet, dass sie von einem gemeinsamen Bereich einer abzutastenden Oberfläche jeweils ein Bild erfassen. Von den zumindest zwei Bildern werden die Disparitäten bestimmt. Diese zumindest zwei Bilder werden unter Berücksichtigung der Disparitäten registriert und das derart registrierte Bildpaar wird ausgewertet.

Durch die Registrierung der Bildpaare anhand der Disparitäten beschreiben die Intensitätswerte korrespondierender Bildpunkte in den zumindest zwei Bildern den gleichen physikalischen Punkt an der abzutastenden Oberfläche, der zur gleichen Zeit mit den Kameramodulen abgetastet worden ist. Hierdurch ist es möglich, die Intensitätswerte der mehreren Bilder in Kombination auszuwerten, um die abzutastende Oberfläche zu analysieren.

Bezugszeichenliste

| | |
|---|---|
| 1 | Abtastvorrichtung |
| 2 | Kamera |
| 3 | Lichtquelle |
| 4 | Steuereinrichtung |
| 5 | Bewegungsdetektor |
| 6 | Förderband |
| 7 | Förderrichtung |
| 8 | Kameramodul |
| 9 | Kameramodul |
| 10 | Kameramodul |
| 11 | Kameramodul |
| 12 | Objektiv |
| 13 | Sichtlinie |
| 14 | Referenzausschnitt |
| 15 | Suchfenster |

**Patentansprüche**

1. Verfahren zum Abtasten von Oberflächen mit einer Stereokamera (2) mit zumindest zwei Kameramodulen (8, 9, 10, 11), welche jeweils ein Objektiv (12) und einen Bildsensor aufweisen, und derart angeordnet sind, dass sie von einem gemeinsamen Bereich einer abzutastenden Oberfläche jeweils ein Farbbild mit jeweils mehreren Bildpunkten erfassen, wobei

die Kameramodule (8, 9, 10, 11) unterschiedliche Farbfilter aufweisen, so dass die einzelnen Kameramodule (8, 9, 10, 11) Farbbilder in unterschiedlichen vorbestimmten spektralen Bereichen erfassen, wobei die einzelnen Farbbilder in Merkmalsbilder gewandelt werden, indem die Bildpunkte der Farbbilder in skalare Intensitäten umgesetzt werden,
die Disparitäten der Bildpunkte der beiden Farbbilder bestimmt werden, wobei die Merkmalsbilder verwendet werden, um die Disparitäten zu bestimmen,
die Bildpunkte der beiden Farbbilder unter Berücksichtigung der Disparitäten zu einem Farbbildpaar registriert werden, indem Farbbildintensitäten der Farbbilder um die Disparitäten verschoben werden, so dass in dem registrierten Farbbildpaar an den Bildpunkten die entsprechenden Farbintensitäten enthalten sind, die mittels des jeweiligen Kameramoduls von derselben Position der abzutastenden Oberfläche erfasst worden sind, und
das derart registrierte Farbbildpaar ausgewertet wird, wobei anhand des registrierten Farbbildpaares ein Oberflächenspektrum einer abgetasteten Oberfläche bestimmt wird.

2. Verfahren nach Anspruch 1,
**dadurch gekennzeichnet,**

**dass** zur Bestimmung der Disparitäten in einem ersten der beiden Bilder ein Referenzausschnitt (14) um jeweils einen vorbestimmten Bildpunkt ausgelesen wird, dieser Referenzausschnitt (14) in einem Bereich um einen Bildpunkt des zweiten Bildes an mehreren Positionen angeordnet wird, wobei der Bildpunkt des zweiten Bildes dem Bildpunkt des ersten Bildes geometrisch entspricht, an einer jeden Position des Referenzausschnittes (14) des ersten Bildes im zweiten Bild ein Korrelationswert berechnet wird, der angibt, wie exakt der Referenzausschnitt (14) des ersten Bildes mit dem jeweiligen Bereich des zweiten Bildes übereinstimmt, wobei die Position des Referenzausschnittes (14) im zweiten Bild ausgewählt wird, für welche der beste Korrelationswert bestimmt wird, und der Abstand des vorbestimmten Bildpunktes des Referenzausschnittes des ersten Bildes an der ausgewählten Position zum geometrisch entsprechenden Bildpunkt des zweiten Bildes als Disparität dem vorbestimmten Bildpunkt im ersten Bild zugeordnet wird, und

diese Bestimmung der Disparität für weitere Bildpunkte eines vorbestimmten Bereichs des ersten Bildes wiederholt wird.

3. Verfahren nach Anspruch 2,
**dadurch gekennzeichnet,**
**dass** beim Bestimmen der Disparität eine Näherungsfunktion erstellt wird, die den Zusammenhang zwischen den Abständen und den entsprechenden Korrelationswerten beschreibt, wobei der Abstand als Disparität bestimmt wird, an welchem diese Näherungsfunktion ein Minimum aufweist.

4. Verfahren nach Anspruch 2 oder 3,
**dadurch gekennzeichnet,**
**dass** als Korrelationswert die Summe der Quadrate der Differenzen der Intensitätswerte der Bildpunkte oder eine Kreuzkorrelationswert berechnet wird.

5. Verfahren nach einem der Ansprüche 1 bis 4,
**dadurch gekennzeichnet,**
**dass** die Intensitäten der Bildpunkte der Bilder entsprechend den Disparitäten verschoben werden, wobei zur Erzeugung der Intensitäten an Bildpunkten in einem regelmäßigen Raster eine Interpolation ausgeführt wird.

6. Verfahren nach einem der Ansprüche 1 bis 5,
**dadurch gekennzeichnet,**
**dass** die Umwandlung der Farbbilder in Merkmalsbilder mittels Transformationsvektoren ausgeführt wird, welche Gewichtungswerte umfassen, die jeweils das Gewicht der einzelnen Farbe für die skalare Intensität wiedergeben.

7. Verfahren nach Anspruch 6,
**dadurch gekennzeichnet,**
**dass** die Transformationsvektoren an die abzutastende Oberfläche angepasst werden, wobei insbesondere Farbwerte von ausgewählten Bildpunkten zur Berechnung von Gewichtungswerten der Transformationsvektoren statistisch ausgewertet werden.

8. Verfahren nach einem der Ansprüche 1 bis 7,
**dadurch gekennzeichnet,**
**dass** die mit den Kameramodulen (8, 9, 10, 11) erfassten Bilder eindimensionale Bilder sind.

9. Verfahren nach Anspruch 8,
**dadurch gekennzeichnet,**
**dass** die Kameramodule (8, 9, 10, 11) eine Zeilenkamera aufweist, mit mehreren unterschiedlichen Sensorzeilen, wobei mit einer jeden Sensorzeile ein separates Zeilenbild erfasst wird, und die einzelnen Zeilenbilder vorzugsweise mittels einer geometrischen Abbildung überlagert werden.

10. Verfahren nach einem der Ansprüche 1 bis 9,
**dadurch gekennzeichnet,**
**dass** mehrere Kameramodule (8, 9, 10, 11) verwendet werden, wobei zumindest eines der Kameramodule Bestandteil zweier Stereokameras ist und vorzugsweise die mehreren Kameramodule (8, 9, 10, 11) von dem gemeinsamen Bereich der Oberfläche ein Bild erfassen, wobei die Bilder der mehreren Kameramodule paarweise registriert werden.

11. Verfahren nach einem der Ansprüche 1 bis 10,
**dadurch gekennzeichnet,**
**dass** anhand der Disparitäten eine dreidimensionale Beschreibung eines abzutastenden Objektes erzeugt wird.

12. Verfahren nach Anspruch 11,
**dadurch gekennzeichnet,**
**dass** Intensitätswerte von Bildpunkten des registrierten Bildpaares in Kombination mit der dreidimensionalen Beschreibung des abzutastenden Objektes ausgewertet werden.

13. Mehrfach-Kamera mit zumindest zwei Kameramodulen (8, 9, 10, 11), welche jeweils ein Objektiv (12) und einen Bildsensor aufweisen, wobei die Kameramodule derart angeordnet sind, dass sie von einem gemeinsamen Bereich einer abzutastenden Oberfläche jeweils ein Bild erfassen, und die Mehrfach-Kamera eine Steuereinrichtung aufweist, die zum Ausführen eines der Verfahren nach einem der Ansprüche 1 bis 12 ausgebildet ist.

## Claims

1. A method for scanning surfaces with a stereo camera (2) comprising at least two camera modules (8, 9, 10, 11) which each comprise a lens (12) and an image sensor and are arranged in such a manner that they capture in each case a color image having a plurality of image points from a common area of a surface to be scanned, wherein

the camera modules (8, 9, 10, 11) comprise different color filters so that the individual camera modules (8, 9, 10, 11) capture color images in different predetermined spectral ranges, the individual color images being transformed into feature images by converting the image points of the color images into scalar intensities,
the disparities of the image points of the two color images are determined, the feature images being used to determine the disparities,
the image points of the two color images are registered to a color image pair while considering the disparities by shifting color image intensities of the color images by the disparities so that the corresponding color intensities, which have been captured by means of the respective camera module from the same position of the surface to be scanned, are contained in the registered color image pair at the image points, and
the color image pair registered in such a manner is evaluated, a surface spectrum of a scanned surface being determined with the aid of the registered color image pair.

2. The method according to claim 1, **characterized in that**

for the determination of the disparities in a first one of the two images, a reference section (14) is extracted in each case around a predetermined image point, this reference section (14) is arranged in an area around an image point of the second image at several positions, the image point of the second image corresponding geometrically to the image point of the first image, a correlation value is calculated at each position of the reference section (14) of the first image in the second image, which indicates how exactly the reference section (14) of the first image coincides with the respective area of the second image, the position of the reference section (14) in the second image being selected for which the best correlation value is determined, and the distance of the predetermined image point of the reference section of the first image at the selected position from the geometrically corresponding image point of the second image being associated as disparity to the predetermined image point in the first image, and
this disparity determination is repeated for additional image points of a predetermined area of the first image.

3. The method according to claim 2, **characterized in that**
during disparity determination, an approximation function is established which describes the relationship between the distances and the corresponding correlation values, the distance at which this approximation function exhibits a minimum being determined as the disparity.

4. The method according to claim 2 or 3,

**characterized in that**
the sum of the squares of the differences of the intensity values of the image points or a cross-correlation value is calculated as the correlation value.

5. The method according to any of claims 1 to 4, **characterized in that**
the intensities of the image points of the images are shifted according to the disparities, an interpolation being performed in a regular grid to generate the intensities at image points.

6. The method according to any of claims 1 to 5, **characterized in that**
the conversion of the color images into feature images is performed by means of transformation vectors, which comprise weighting values that each represent the weight of the individual color for the scalar intensity.

7. The method according to claim 6, **characterized in that**
the transformation vectors are adapted to the surface to be scanned, in particular color values of selected image points being statistically evaluated to calculate weighting values of the transformation vectors.

8. The method according to any of claims 1 to 7, **characterized in that**
the images captured with the camera modules (8, 9, 10, 11) are one-dimensional images.

9. The method according to claim 8, **characterized in that**
the camera modules (8, 9, 10, 11) comprise a line scan camera with several different sensor lines, a separate line image being captured with each sensor line, and the individual line images being superimposed preferably by means of a geometric representation.

10. The method according to any of claims 1 to 9, **characterized in that**
several camera modules (8, 9, 10, 11) are used, at least one of the camera modules being an integral part of two stereo cameras, and preferably the several camera modules (8, 9, 10, 11) capturing an image from the common area of the surface, the images of the several camera modules being registered in pairs.

11. The method according to any of claims 1 to 10, **characterized in that**
a three-dimensional description of an object to be scanned is generated with the aid of the disparities.

12. The method according to claim 11, **characterized in that**

intensity values of image points of the registered image pair are evaluated in combination with the three-dimensional description of the object to be scanned.

13. A multiple camera comprising at least two camera modules (8, 9, 10, 11) which each comprise a lens (12) and an image sensor, the camera modules being arranged in such a manner that they each capture an image from a common area of a surface to be scanned, and the multiple camera comprising a control device which is designed to perform any of the methods according to any of claims 1 to 12.

**Revendications**

1. Procédé de balayage de surfaces avec une caméra stéréoscopique (2) comprenant au moins deux modules de caméra (8, 9, 10, 11), lesquels présentent respectivement un objectif (12) et un capteur d'image, et sont disposés de telle manière qu'ils captent respectivement une image couleur avec respectivement plusieurs points d'image à partir d'une zone commune d'une surface à balayer, sachant que

les modules de caméra (8, 9, 10, 11) présentent des filtres couleur différents afin que les modules de caméra (8, 9, 10, 11) individuels captent des images couleur dans des gammes spectrales prédéterminées différentes, sachant que les images couleur individuelles sont transformées en images de caractéristiques en ce que les points d'image des images couleur sont convertis en intensités scalaires,

les disparités des points d'image des deux images couleur sont déterminées, sachant que les images de caractéristiques sont utilisées pour déterminer les disparités,

les points d'image des deux images couleur sont enregistrées en une paire d'images couleur compte tenu des disparités en ce que des intensités d'image couleur des images couleur sont décalées à raison des disparités afin que les intensités de couleur correspondantes qui ont été captées moyennant le module de caméra respectif à partir de la même position de la surface à balayer soient contenues dans la paire d'images couleur enregistrée au niveau des points d'image, et

la paire d'images couleur enregistrée de cette manière est évaluée, sachant qu'un spectre de surface d'une surface balayée est déterminé à l'aide de la paire d'images couleur enregistrée.

2. Procédé selon la revendication 1,
   **caractérisé en ce que**

pour la détermination des disparités dans une première des deux images, une section de référence (14) autour de respectivement un point d'image prédéterminé est extraite, cette section de référence (14) est disposée dans une zone autour d'un point d'image de la deuxième image dans plusieurs positions, sachant que le point d'image de la deuxième image correspond géométriquement au point d'image de la première image, une valeur de corrélation qui indique avec quelle exactitude la section de référence (14) de la première image coïncide avec la zone respective de la deuxième image est calculée dans chaque position de la section de référence (14) de la première image dans la deuxième image, sachant que la position de la section de référence (14) est sélectionnée dans la deuxième image pour laquelle la meilleure valeur de corrélation est déterminée, et la distance du point d'image prédéterminé de la section de référence de la première image dans la position sélectionnée par rapport au point d'image géométriquement correspondant de la deuxième image est associée comme disparité au point d'image prédéterminé dans la première image, et

cette détermination de la disparité est répétée pour des points d'image supplémentaires d'une zone prédéterminée de la première image.

3. Procédé selon la revendication 2,
   **caractérisé en ce que**
   lors de la détermination de la disparité, une fonction d'approximation qui décrit le rapport entre les distances et les valeurs de corrélation correspondantes est établie, sachant que la distance à laquelle cette fonction d'approximation présente un minimum est déterminée comme disparité.

4. Procédé selon la revendication 2 ou 3,
   **caractérisé en ce que**
   la somme des carrés des différences des valeurs d'intensité des points d'image ou une valeur de corrélation croisée est calculée comme valeur de corrélation.

5. Procédé selon l'une des revendications 1 à 4,
   **caractérisé en ce que**
   les intensités des points d'image des images sont décalées selon les disparités, sachant que pour générer les intensités au niveau de points d'image, une interpolation est exécutée dans une trame régulière.

6. Procédé selon l'une des revendications 1 à 5,
   **caractérisé en ce que**
   la conversion des images couleur en images de caractéristiques est exécutée moyennant des vecteurs de transformation, lesquels comprennent des valeurs de pondération qui représentent respectivement le poids de la couleur individuelle pour l'intensité scalaire.

7. Procédé selon la revendication 6,
   **caractérisé en ce que**
   les vecteurs de transformation sont adaptés à la surface à balayer, sachant qu'en particulier des valeurs de couleur de points d'image sélectionnés sont évaluées statistiquement pour calculer des valeurs de pondération des vecteurs de transformation.

8. Procédé selon l'une des revendications 1 à 7,
   **caractérisé en ce que**
   les images captées avec les modules de caméra (8, 9, 10, 11) sont des images unidimensionnelles.

9. Procédé selon la revendication 8,
   **caractérisé en ce que**
   les modules de caméra (8, 9, 10, 11) présentent une caméra linéaire avec plusieurs lignes de capteur différentes, sachant qu'une image linéaire distincte est captée avec chaque ligne de capteur, et les images linéaires individuelles sont superposées de préférence moyennant une représentation géométrique.

10. Procédé selon l'une des revendications 1 à 9,
    **caractérisé en ce que**
    plusieurs modules de caméra (8, 9, 10, 11) sont utilisés, sachant qu'au moins un des modules de caméra fait partie intégrante de deux caméras stéréoscopiques et de préférence les plusieurs modules de caméra (8, 9, 10, 11) captent une image à partir de la zone commune de la surface, sachant que les images des plusieurs modules de caméra sont enregistrées par paires.

11. Procédé selon l'une des revendications 1 à 10,
    **caractérisé en ce que**
    une description tridimensionnelle d'un objet à balayer est générée à l'aide des disparités.

12. Procédé selon la revendication 11,
    **caractérisé en ce que**
    les valeurs d'intensité de points d'image de la paire d'images enregistrée sont évaluées en combinaison avec la description tridimensionnelle de l'objet à balayer.

13. Caméra multiple comprenant au moins deux modules de caméra (8, 9, 10, 11), lesquels présentent respectivement un objectif (12) et un capteur d'image, sachant que les modules de caméra sont disposés de telle manière qu'ils captent respectivement une image à partir d'une zone commune d'une surface à balayer, et la caméra multiple présente un dispositif de commande qui est constitué pour exécuter un des procédés selon l'une des revendications 1 à 12.

FIG. 1

$$F_0\left(\chi-\frac{b-1}{2},y-\frac{b-1}{2}\right)$$

$$F_0\left(\chi+\frac{b-1}{2},y-\frac{b-1}{2}\right)$$

FIG. 2

FIG. 3

FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20040032971 A1
- US 20100020178 A1
- US 8275195 B2
- US 5432712 A
- DE 102005028490 A1
- WO 2007054332 A1
- US 20090033755 A1
- CA 2897712
- CA A1
- WO 2014117954 A
- DE 102007027958 A1
- US 20110206236 A1
- US 5179441 A
- US 20140139642 A1
- US 20090268010 A1
- DE 102015105656

**In der Beschreibung aufgeführte Nicht-Patentliteratur**

- Mean Shift, Mode Seeking, and Clustering. **CHENG, YIZONG.** IEEE Transactions on Pattern Analysis and Machine Intelligence. IEEE, August 1995, vol. 17, 790-799